# EUROPÄISCHE PATENTSCHRIFT

(11) **EP 3 313 149 B1**
(45) Veröffentlichungstag und Bekanntmachung des Hinweises auf die Patenterteilung: **21.02.2024**
(21) Anmeldenummer: 17197369.6
(22) Anmeldetag: 19.10.2017
(51) Int. Cl.: H04L 12/28, G01S 5/02, H04W 64/00, H05B 39/04, G01S 11/06, G01S 11/08

(54) **KOMMUNIKATIONSVERFAHREN**
COMMUNICATION METHOD
PROCÉDÉ DE COMMUNICATION

(30) Priorität: 19.10.2016 DE 102016220526
(43) Veröffentlichungstag der Anmeldung: 25.04.2018
(73) Patentinhaber: HiAsset GmbH, 67657 Kaiserslautern (DE)
(72) Erfinder: Hinkel, Ralf, 67657 Kaiserslautern (DE)
(74) Vertreter: Pietruk, Claus Peter

(56) Entgegenhaltungen:
- EP-A1- 2 693 697
- EP-A2- 0 626 635
- US-A1- 2009 265 470
- US-B2- 6 731 908

## Beschreibung

Die vorliegende Erfindung betrifft das oberbegrifflich Beanspruchte und bezieht sich somit auf die Steuerung und Kommunikation von Geräten.

Es gibt mittlerweile eine Vielzahl von Geräten und Installationen, die ferngesteuert betätigt werden können oder automatisch auf die Annäherung eines bekannten Benutzers reagieren. Bekannt ist, dazu eine kurzreichweitige Kommunikationsverbindungen zwischen einerseits dem zu betätigenden Gerät und einem vom Benutzer zur Bedienung verwendeten Gerät aufzubauen. Als derartige kurzreichweitige Kommunikationsverbindungen seien beispielsweise Bluetooth, Zigbee, Bluetooth LT, WLAN usw. genannt.

Mittlerweile sind Fernsteuerungen auf Basis kurzreichweitiger Kommunikationsverbindungen auch so preiswert geworden, dass sich ein durchschnittlicher Benutzer bereits eine große Vielzahl entsprechender fernsteuerbarer Geräte leisten kann, die beispielweise in seiner Privatwohnung auf vergleichsweise engem Raum untergebracht sein können; dass neben der Verwendung fernsteuerbarer Geräte in Privatwohnungen selbstverständlich völlig gleichwertige Geräte auch in öffentlich zugänglichen Gebäuden, in Büros, Werkstätten usw. einsetzbar sind, und dort ebenfalls die nachfolgend beschriebenen Probleme auftreten können, sei der Vollständigkeit halber erwähnt.

Als ein typisches Gerät, das vom Benutzer zur Bedienung anderer Geräte verwendet werden kann, sei das Smartphone genannt. Heutige Smartphones verfügen neben den drahtlosen Weitbereichsverbindungen, wie WLAN oder Mobilfunk- basiertem Internetzugang, zusätzlich über eine lokale drahtlose Nahbereichsverbindung wie bspw. Bluetooth. Sollen über das Smartphone und vorzugsweise die lokale Nahbereichsverbindung, wie bspw. Bluetooth, Gebäude(fern-)steuerungen bedient, Türen geöffnet oder Kaufautomaten bedient werden, sind eine Vielzahl von Programmen, sogenannte APPs für die verschiedenen Steuerungen notwendig.

Soll in einer solchen APP für die Gebäudesteuerung ein spezifischer Raum bedient werden, muss durch mehrere Menüs oder eine Karte mühsam navigiert werden, bis die richtige Menübedienstelle bspw. zum Schalten des Raumlichts oder Einstellung der Heizung gefunden wird. In einem Bürogebäude mit vielen elektronisch gesicherten Türen ist es ebenfalls aufwendig die richtige Tür im zugehörigen Programm bzw. Bedienmenü zu finden.

Die lokale drahtlose Nahbereichsverbindung, die vom Smartphone zur Sende-/Empfangseinrichtung mit angeschlossenem Steuer- und/oder Sensormodul des Gerätes zu deren Bedienung aufgebaut wird, wird im folgenden als Kommunikationsverbindung bezeichnet und verwendet vorzugsweise eine drahtlose Bluetooth-Kommunikation mit einigen Metern Reichweite.

Per se ist es wünschenswert, automatisch das zum Bedienen der lokalen Einrichtung notwendige Programm im Smartphone zu laden, zu aktivieren und ins passende Untermenü zu verzweigen, so dass der Nutzer sofort und ohne Menüauswahl direkt bspw. die lokale Raumlichtsteuerung, Heizungsregelung oder Türöffnungsstelle über sein Smartphone bedienen oder automatisch bei Annäherung Schaltvorgänge und Steuerfunktionen auslösen kann.

Das hier beispielhaft genannte Smartphone als vom Benutzer zur Fernbedienung zu verwendende Gerät muss dafür entsprechend ausgelegt sein und geeignete Funktionalitäten besitzen. Die Ansteuerung eines fernzusteuernden Gerätes erfordert aber in jedem Fall unter anderem, zunächst überhaupt zu erkennen, welches fernzusteuernde Gerät anzusprechen ist.

Dieses Erkennen anzusprechender Geräte wird aber erschwert, wenn per se eine Vielzahl von Geräten als potentielle Ansprechpartner zur Verfügung stehen und eine Kommunikationsverbindung gezielt zu einem ganz bestimmten dieser Geräte aufgebaut werden soll, nur wenige Geräte angesprochen werden sollen, eine Verbindung über ein bestimmtes Gerät aufgebaut werden soll usw. Hier ist besonders bedeutsam, dafür Sorge zu tragen, dass die Verbindung tatsächlich zu dem gewünschten Gerät und nicht zu einem ganz anderen aufgebaut wird.

Diese Schwierigkeit wird noch vergrößert, wenn die Geräte nicht beliebig viel Energie verbrauchen dürfen, sondern energiesparend betrieben werden sollen; dies ist aus ökologischen Gründen zwar per se bei jedem Gerät geboten, besonders kritisch ist es aber bei batteriebetriebenen Geräten, da hier ein nicht hinreichend energiesparender Betrieb auch einen zu häufigen Batteriewechsel erfordert.

Aus der US 6,731,908 B2 ist es bekannt, den Abstand zwischen zwei Objekten zu bestimmen, indem ein Frequenzsprungschema wie bei Bluetooth verwendet wird, um den Phasenversatz des empfangenen Signals bei verschiedenen Frequenzen zu bestimmen und daraus einen Abstand zu ermitteln.

Aus der EP 2 693 697 ist ein Gesamtsystem der Gebäudesystemtechnik und/oder Türkommunikation bekannt mit einer Vielzahl von miteinander verbundenen Systemgeräten, welche jeweils mit einer Steuerungs- und Auswerteeinheit und einer damit verbundenen Kommunikationskomponente versehen sind, weiter mit einer Vielzahl von Mobilgeräten, welche jeweils mit einer Kommunikationskomponente versehen sind, wobei jeweils drahtlose Kommunikationskanäle zwischen einer Kommunikationskomponente mindestens eines Mobilgerätes und einer Kommunikationskomponente mindestens eines Systemgeräts geschaffen sind und wobei aktive Ortungskomponenten die Lokalisierung der Mobilgeräte in der direkten Umgebung des Gesamtsystems bewerkstelligen und die Mobilgeräte als aktive Sensoren in das Gesamtsystem eingebunden sind.

Die Aufgabe der vorliegenden Erfindung besteht darin, Neues für die gewerbliche Anwendung bereitzustellen.

Die Lösung dieser Aufgabe wird in unabhängiger Form beansprucht. Bevorzugte Ausführungsformen finden sich in den Unteransprüchen.

Ein erster Grundgedanke der vorliegenden Erfindung kann demnach darin gesehen werden, dass bei einem Kommunikationsverfahren, bei dem Geräte untereinander eine drahtlose Kommunikationsverbindung im Ansprechen auf eine Vielzahl drahtlos gemessener Entfernungen aufbauen, vorgesehen ist, dass die Entfernungen durch Messungen auf unterschiedlichen, voneinander getrennten Frequenzen ermittelt werden. (Es werden also sowohl die Mittelfrequenzen der zur Messung herangezogenen Frequenzintervalle voneinander verschieden sein als auch die Grenzen der zur Messung herangezogenen Frequenzintervalle voneinander so weit beabstandet sein, dass ein Signal herkömmlicher Stärke im ersten Frequenzintervall die Messung im zweiten Frequenzintervall nicht beeinflusst).

Es sei zunächst darauf hingewiesen, dass Frequenzen in der vorliegenden Anmeldung ohne weiteres als Drahtlosfunk-Frequenzen zu verstehen sind, die von Schallwellen, Lichtwellen, Vibrationswellen oder dergleichen abzugrenzen sind. Dass elektromagnetische Drahtlosfunksignale unterschiedlicher Frequenzen herangezogen werden können, kann zwar insbesondere die Verwendung mit Nahfeldern umfassen. Im Regelfall wird aber eine Messung aus einiger Entfernung erfolgen, so dass typisch Drahtlosfunk-Frequenzen verwendet werden, die zu lokalen oder niederreichweitigen Drahtlosverbindungen wie Bluetooth, Zigbee, Z-Wave oder WLAN gehören.

Es wird demnach unter anderem ausgenutzt, dass nicht nur Entfernungsmessungen besonders einfach implementiert werden können, also nur ein geringer Schaltungsaufwand erforderlich ist, sondern dass auch durch die Stützung auf unterschiedliche Frequenzen eine erhebliche Unterdrückung von Störungen gewährleistet werden kann. Zudem ist nicht nur der bauliche Schaltungsaufwand gering, was zu niedrigen Kosten beiträgt- oftmals sind etwa entfernungsindikative Signalstärken, also Feldstärken, bereits ohne weiteres mit erfassbar, wie die Messung von WLAN Signalen und deren Signalstärken zeigt- sondern es ist auch möglich, die Signale mit nur geringem Energieaufwand zu erfassen. Besonders bevorzugt ist dies daher dort, wo ein Gerät energiesparend betrieben werden muss, etwa weil es batteriebetrieben ist und ein nur seltener Austausch von Batterien wünschenswert ist. Hier kann etwa erreicht werden, dass zunächst nur Feldstärken empfangener Signale gemessen werden, ohne dass irgendeine direkte sofortige Instantan-Reaktion auf den Empfang der Signale oder auf die durch diese codierte Information erfolgt. Vielmehr kann die Entwicklung der Feldstärke über der Zeit erfasst und ausgewertet werden, um bei einem Anstieg derselben auf eine Annäherung des Drittsenders zu schließen. Erst wenn eine solche - energiesparend- erkannt wurde- brauchen in einem empfangenden Gerät weitere Schaltkreise aktiviert werden, die dann für einen Aufbau der Verbindung benutzt werden, also wechselseitig z.B. IDs austauschen, Kommunikationskanäle, auf denen übertragen werden kann, aushandeln, Advertising-Nachrichten austauschen usw. Nach dieser Verbindungsaufbauphase wird dann erforderlichenfalls die so aufgebaute Verbindung genutzt. Die Entfernungsmessungen der vorliegenden Erfindung gehen damit der eigentlichen Verbindungsaufbauphase typisch voran und es ist möglich, dies energiesparend zu veranlassen. So brauchen beispielsweise die schon energiesparend zu betreibenden Schaltkreise nicht dauerhaft betrieben werden; es reicht ein wiederholter, regelmäßiger Betrieb mit kurzen Betriebsintervallen und gegen die Betriebsintervalle langen Pausen.

Typisch wird das Betriebsintervall-Pausendauer-Verhältnis mindestens 1: 1, bevorzugt mindestens 1:10, insbesondere bevorzugt über 1:20, besser über 1:50 betragen. Die Betriebsintervalle haben Dauern, die eine Entfernungs-Messung erlauben, welche von Einschwingvorgängen usw. wenig beeinflusst ist. Typisch können etwa für Feldstärkebasierte Messungen Betriebsintervalle von einigen Millisekunden bis einigen 10 Millisekunden vorgesehen werden. Die sich damit aus bevorzugten Betriebsintervall-Pausendauer-Verhältnissen ergebenden Pausendauern sind noch so kurz, dass eine immer noch ausreichend schnelle Reaktion auf Annäherung eines sendenden Gerätes erfolgen wird und zudem Entfernungsänderungen insbesondere bei sich zu Fuß nähernden Personen gut erkennbar sind, ohne ungebührliche und als unkomfortabel empfundene Verzögerungen zu bedingen.

Zugleich bietet die Messung auf unterschiedlichen Frequenzen den Vorteil, dass Störungen sich wesentlich weniger auswirken werden. So sind Störungen durch Interferenzen bei Berücksichtigung unterschiedlicher, in unterschiedlichen Frequenzbereichen liegender Frequenzen, unwahrscheinlicher. Auch ist unwahrscheinlich, dass Drittsender beide oder mehrere Frequenzen in gleicher Weise stören. So nimmt also die Präzision der Messung trotz geringstem Aufwand zu.

Es ist erfindungsgemäß vorgesehen, dass bei einem erfindungsgemäßen Kommunikationsverfahren die drahtlose Kommunikationsverbindung im Ansprechen auf eine Änderung der gemessenen Entfernungen bestimmt wird. Es brauchen also nur die Werte der entfernungsindikativen Messwerte betrachtet werden, ohne deren exakte zeitliche Entwicklung zu berücksichtigen. So können etwa Haltephasen außer Acht bleiben, ein Vor- und Zurückgehen usw.

Auch kann bei einem erfindungsgemäßen Kommunikationsverfahren die Kommunikationsverbindung im Ansprechen auf eine Abnahme der Distanz zwischen den Geräten und/oder auf eine unter Berücksichtigung der gemessenen Entfernung bestimmten Annäherungsgeschwindigkeit der Geräte aufeinander zu bestimmt werden. In einem solchen Fall wird also untersucht, wie sich die Messwerte über der Zeit entwickeln bzw. von Messwert zu Messwert. Dies kann auf jeder Frequenz einzeln erfolgen und eine Annäherung erkannt werden, wenn auf mindestens einer Frequenz ein Anwachsen der Signalstärken, eine Verkürzung der Laufzeiten usw. erkannt wurde. Alternativ kann eine Annäherung erkannt werden, wenn auf mehreren Frequenzen jeweils sukzessive Messwerte erfasst werden, die alle auf eine Annäherung oder wenigstens eine nicht zunehmende Entfernung hindeuten. Auch wäre möglich, eine Annäherung anzunehmen, wenn aus Paaren sukzessiver Messungen eine Zunahme der Signalstärke, Abnahme der Signallaufzeit oder dergl. erfasst wird, auch wenn dies nicht stets für Paare aller Frequenzen gilt, sondern die Paare, auf denen eine Zunahme der Signalstärke, Abnahme der Signallaufzeit oder dergl. erfasst wird, während der Erkennungsphase in unterschiedlichen Frequenzen bzw. Frequenzbändern liegen. Dies ist besonders vorteilhaft bei Vorliegen stärkerer Störungen. Statt Paaren können auch Gruppen von Messwerten betrachtet werden, z.B. von fünf aufeinanderfolgenden Messwerten. Eine Annäherung wird dann z.B. angenommen, wenn allenfalls ein Ausreißer nicht auf eine Annäherung deutet. Dies macht die Anordnung bzw. das Verfahren störunempfindlicher.

Es ist möglich und vorteilhaft, wenn bei einem erfindungsgemäßen Kommunikationsverfahren vorgesehen ist, dass die Entfernungen durch Laufzeitmessungen auf unterschiedlichen Frequenzen gemessen werden. Es sei erwähnt, dass sich Laufzeitmessungen gut und mit geringem Aufwand messen lassen.

Es ist möglich und vorteilhaft, wenn bei einem erfindungsgemäßen Kommunikationsverfahren vorgesehen ist, dass die Entfernung durch Feldstärken-Messungen auf unterschiedlichen Frequenzen gemessen werden. Dies ist besonders bevorzugt. Es sei übrigens erwähnt, dass es nicht zwingend ist, dass ein Gerät, welches ein bestimmtes, einem Kommunikationsstandard wie WLAN zugeordneten Frequenzband zur vor Kommunikationsaufbau erfolgenden Entfernungsmessung heranzieht, auch in der Lage sein muss, über diesen Kommunikationsstandard zu kommunizieren. Vielmehr ist es beispielsweise möglich, ein Heimautomationsmodul, das typisch gemäß einem Bluetooth-Standard kommunizieren soll, ergänzend für die Messung der Entfernung zu für dessen Steuerung vorgesehenen, bluetooth- und WLAN fähigen Smartphones zu ertüchtigen, indem eine Feldstärkemessung für Frequenzen im WLAN-Bandbereich implementiert wird, ohne deswegen aber das Heimautomationsmodul deswegen bereits mit einem vollständigen WLAN-Modul auszugestalten.

Es ist erfindungsgemäß vorteilhaft, dass bei einem erfindungsgemäßen Kommunikationsverfahren vorgesehen ist, dass die Entfernungen durch Messungen ermittelt werden, die zumindest zum Teil Signale mit Frequenzen jenes Kommunikationsstandards erfassen, nach welchem die drahtlose Kommunikationsverbindung aufgebaut wird. Es kann also beispielsweise eine Messung unter Heranziehung von Bluetooth-Frequenzen erfolgen, wenn das Gerät über Bluetooth kommunizieren soll. Dabei sei betont, dass mit Bluetooth alle unterschiedlichen, sich entwickelnden oder bereits entwickelten Bluetooth-Versionen gemeint sind, einschließlich z.B. Bluetooth-LE und die Erfindung für alle diese anwendbar ist. Ebenso ist einsichtig, dass unterschiedliche WLAN- bzw. WIFI-Bänder bestehen und die Erfindung diese alle gemeinsam oder einzeln nutzen kann. Die beispielhafte Erwähnung von Bluetooth und WLAN soll zudem andere Technologien, Kommunikationsstandards usw. nicht ausschließen, auch wenn die genannten Kommunikationsstandards aufgrund ihrer aktuellen Verbreitung vorteilhaft sind.

Es ist erfindungsgemäß, dass bei einem erfindungsgemäßen Kommunikationsverfahren vorgesehen ist, dass die Entfernungen durch Messungen ermittelt werden, die zumindest zum Teil Signale mit Frequenzen nicht jenes Kommunikationsstandards erfasst, nach welchem die drahtlose Kommunikationsverbindung aufgebaut wird. Erwähnt sei, dass die Verwendung von Frequenzen, die überhaupt einem Kommunikationsstandard zugeordnet werden können, insoweit vorteilhaft ist, weil damit sichergestellt ist, dass bei einer breiten Vielzahl von Geräten ohne weiteres eine Annäherung erfasst werden kann.

Es ist daher zusätzlich und/oder alternativ möglich und vorteilhaft, wenn bei einem erfindungsgemäßen Kommunikationsverfahren bei dem Geräte im Ansprechen auf eine Vielzahl gemessener Entfernungen eine drahtlose Kommunikationsverbindung aufbauen, vorgesehen ist, dass die Entfernungen durch Messungen auf unterschiedlichen Frequenzbändern ermittelt werden, von denen eines für den Aufbau der drahtlosen Kommunikationsverbindung verwendet wird und von welchen mindestens eines einem anderen Kommunikationsstandard zugeordnet ist.

Es ist weiter zusätzlich und/oder alternativ möglich und vorteilhaft, wenn bei einem erfindungsgemäßen Kommunikationsverfahren vorgesehen ist, dass die ersten Frequenzen bzw. der erste Frequenzbereich für einen erste Kommunikationsstandard verwendet wird, insbesondere einen kurzreichweitigen aus der Gruppe Zigbee, ZWave, Bluetooth, Bluetooth-LE; und zweite Frequenzen bzw. der zweite Frequenzbereich einem zweiten Kommunikationsstandard zugeordnet ist, insbesondere einen längerreichweitigen bevorzugt aus der Gruppe UMTS und WLAN.

Es ist zusätzlich und/oder alternativ möglich und vorteilhaft, wenn bei einem erfindungsgemäßen Kommunikationsverfahren vorgesehen ist, dass bei miteinander in Verbindung tretenden Geräten auf beiden Seiten die Entfernung durch Messungen auf unterschiedlichen Frequenzen ermittelt wird und eine drahtlose Kommunikationsverbindung im Ansprechen auf eine Vielzahl drahtlos gemessener Entfernungen aufgebaut wird. Dies ist insbesondere dort vorteilhaft, wo fest installierte Geräte vorliegen.

Es ist zusätzlich und/oder alternativ möglich und vorteilhaft, wenn bei einem erfindungsgemäßen Kommunikationsverfahren vorgesehen ist, dass vor Verbindungsaufbau zumindest eines der Geräte nur temporär so aktiv geschaltet ist, wie es das Abfragen auf die Notwendigkeit eines möglichen Verbindungsaufbau erfordert, während das zumindest eine Gerät während anderer Zeiten in einen Standby- oder Energiesparmodus geschaltet ist.

Beschrieben wird auch eine Kommunikationsvorrichtung, insbesondere zur Ausführung eines Verfahrens wie vorstehend beschrieben, mit einer Feldstärkemesseinheit zur Messung von Feldstärken von Signalen auf unterschiedlichen Frequenzen und einer einen Teil der Frequenzen nutzenden Kommunikationsschnittstelle, die aktiv geschaltet werden kann, wobei eine Anordnung zur Auswertung der Feldstärkemessungen vorhanden ist, die zur Aktivschaltung der Kommunikationsschnittstelle im Ansprechen auf die Auswertung der Feldstärkemessungen ausgebildet ist. Es wird also vorgeschlagen, dass die Geräte so ausgebildet sind, dass etliche, für die eigentliche Entfernungsmessung nicht benötigte Schaltkreise inaktiv oder stromsparend geschaltet werden. Auch die Auswerteeinheit kann energesparend implementiert werden. Wie vorstehend erwähnt, müssen im wesentlichen nur Signalstärken usw. miteinander verglichen werden, was durch einfache Komparatoren geschehen kann. Zudem ist bei nur kurzem Pulsbetrieb mit langen Pausen ausreichend Zeit, die Auswertung, d.h. z.B. den Signalstärkevergleich vorzunehmen, so dass entsprechende Taktraten niedrig sein können, insbesondere nicht mehr als 1/10 der während aktiver Kommunikationsverbindungen verwendeten Taktfrequenzen.

Offenbart wird weiter für ein Kommunikationsverfahren, worin Knoten in einem Maschennetzwerk miteinander per Broadcast kommunizieren, wobei vorgesehen ist, dass die einzelnen Knoten Nachrichten zeitlich versetzt zueinander, bevorzugt auf unterschiedlichen Frequenzkanälen, übertragen.

Es wird somit erfindungsgemäß die Annäherung des Nutzers an die lokale Einrichtung anhand der drahtlosen Kommunikationsverbindung zwischen beiden bestimmt. Die Kommunikationsverbindung wird dafür z.B. gleichzeitig zur Entfernungs- und/oder Geschwindigkeitsbestimmung des Nutzers bezogen auf die lokale Sende-/Empfangseinrichtung und des angeschlossenen und zu bedienenden Steuer- und/oder Sensormoduls herangezogen. Die Bestimmung der Annäherung kann bspw. durch Messung der Feldstärke der Kommunikationsverbindung zwischen Smartphone und lokaler Einrichtung, vorzugsweise von beiden Seiten aus, geschehen, als auch durch bekannte Entfernungsmessverfahren anhand der Signallaufzeit zwischen Smartphone und der Sende-/Empfangseinrichtung. Es wird weiter vorgeschlagen, eine zweite Kommunikationsverbindung zur Entfernungsmessung heranzuziehen.

Es soll erwähnt werden, dass neben der Auswahl des notwendigen Bedienmenüs durch Annäherung und/ oder Gestenerkennung, auch automatisch Schalt- und Steuervorgänge eingeleitet oder Nachrichten versendet werden können. So können bspw. bei Annäherung des Nutzers an ein Steuer- und/oder Sensormodul automatisch Licht geschaltet, am Haus geklingelt, Meldungen an Dritte oder andere Steuereinheiten verschickt, audiovisuelle Aufzeichnungen gestartet, Alarmanlagen aktiv bzw. inaktiv geschaltet oder eine Tür selbstständig geöffnet bzw. verriegelt werden.

Die gleichzeitige Bestimmung des Abstands zwischen Smartphone zu mehreren Sende- /Empfangs- einrichtungen ermöglicht die Triangulation und Positionsbestimmung des Smartphones in Relation zu den Sende-/Empfangseinrichtungen. Dies kann dazu verwendet werden, eines der in der Nähe des Smartphones gelegenen Steuer- und/oder Sensormodul zu identifizieren, ohne dass dieses selbst über eine Nahbereichs- Empfangseinrichtung verfügen muss, um dann automatisch das zugehörige Bedienmenü dieses Moduls oder Gerätes zu laden und/oder zu aktivieren.

Es soll erwähnt werden, dass die einzelnen Sende-/Empfangseinrichtungen (Knoten) nicht nur mit dem Smartphone kommunizieren sondern auch untereinander, und dabei vorzugsweise die gleiche lokale drahtlose Kommunikationsverbindung nutzen. Damit die vielen Knoten sich nicht behindern, werden die Nachrichten zwischen ihnen, also die Steuer- und Statusdaten nicht nur auf verschiedenen Frequenzkanälen, sondern auch zeitlich versetzt nach per se bekannten Verfahren übertragen.

Knoten eines Maschennetzwerke werden bei der Kommunikation also bevorzugt nicht nur verschiedene Frequenzkanäle innerhalb des für den jeweilige Kommunikationsstandard vorgesehenen Frequenzbandes verwenden, sondern auch zeitlich versetzt nach bekannten Verfahren nach per se bekannt Verfahren übertragen werden. Die per se bekannte Möglichkeit, die Kanäle und damit die verwendeten Kanalfrequenzen während eines Kommunikationsvorganges regelmäßig zu wechseln, um Daten zu übertragen, sei erwähnt. Es sei weiter erwähnt, dass vorliegend der Begriff Kommunikationsstandard verwendet wird, um darauf abzuheben, dass es bei bestimmten erfindungsgemäßen Nutzungen von Kommunikationsverbindungen weniger auf die exakte Einhaltung von Datenformaten mit Headern, Nutzlast, Kennungen, Codierungen, Verschlüsselungen usw. ankommt, sondern schlicht darauf, dass für die Kommunikationsverbindung Drahtlos-Signale in einem bestimmten Frequenzbereich, verwendet wird. Dass ein dafür verwendetes Band in viele Kanäle unterteilt sein kann, sei erwähnt. Es sei auch erwähnt, dass es im Verlauf der tatsächlich aufgebauten Kommunikationsverbindung dann sehr wohl darauf ankommen wird, dass bestimmte Protokolle befolgt werden.

Insofern sei auch erwähnt und betont, dass ein solcher Wechsel des Frequenzkanals, über welchen kommuniziert wird, einerseits nicht zwingend mit dem Wechsel des Kommunikationsprotokolls einhergeht. Vielmehr wird gerade bei bestimmten Kommunikationsprotokollen automatisch ein häufiger Wechsel des Frequenzkanals erfolgen. Es sei auch betont, dass es bei bestimmten Kommunikationsprotokollen- erwähnt sei beispielhaft Bluetooth- vorgesehen ist, den Kanal innerhalb des Frequenzbandes regelmäßig zu wechseln; das Aushandeln eines Verbindungsaufbaus, das sog. Advertising, braucht aber nicht alle dieser Kanäle zu verwenden, sondern kann auf einem oder einigen wenigen, insbesondere stets den gleichen Kanälen erfolgen. Dies senkt evtl. zwar die Übertragungsrate von Daten, da gegebenfalls auf genau diesen - allgemein und damit stark benutzten - Kanälen eher mit Einstreuungen durch an einem aktuellen Kommunikationsaufbau nicht zu beteiligenden Drittsendern zu rechnen ist, gewährleistet aber eher, dass ein gewünschter Kommunikationsaufbau einfach und zügig erfolgen kann. Während damit der eigentliche Kommunikationsaufbau evtl. auf bestimmten, stets gleichen Kanälen innerhalb eines zur Verfügung stehenden Frequenzbandes erfolgt, braucht dies für die Entfernungsmessung nicht der Fall sein. Gerade Feldstärkemessungen können evtl. auch andere Kanäle (mit)nutzen. Eine Feldstärkemessungen muss also nicht zwingend schmalbandig auf einen einzelnen Kanal beschränkt sein, sondern kann z.B. alle oder einen wesentlichen Teil der in einem Frequenzband oder von einem Kommunikationsprotokoll genutzten Kanäle erfassen.

Es ist sogar möglich, die Feldstärke breitbandig im gesamten oder einem wesentlichen Teilbereich eines Frequenzbandes zu erfassen. Zudem ist zu beachten, dass viele Geräte nicht nur auf einem Frequenzband arbeiten. Üblicherweise arbeiten Mobiltelefone/Smartphones im Mobilfunkbereich auf verschiedenen Frequenzbändern. Dazu kommen noch die Frequenzbänder für WLAN und Bluetooth. Deshalb kann es zweckmässig sein, auf mehr als auf einem Frequenzband nach einem Anstieg der Feldstärke zu schauen um damit eine Annäherung zu detektieren. Selbst dort, wo ein lokales Gerät, beispielsweise ein batteriebetriebenes Heimautomationsmodul mit Bluetooth oder einer anderen kurzreichweitigen Schnittstelle nur und ausschließlich gemäß diesem kurzreichweitigen Kommunikationsprotokoll kommuniziert und auch nur für die Kommunikations gemäß diesem Kommunikationsprotokoll ausgelegt ist, kann es zweckmässig und vorteilhaft sein, Feldstärkemessungen auf anderen Frequenzbändern, die anderen Kommunikationsprotokollen bzw. Kommunikationsstandards zugeordnet sind, zusätzlich und/oder alternativ vorzusehen. Eine Vorrichtung zur Messung der Feldstärke eines bekannten Frequenzbandes lässt sich sehr energiesparend aufbauen, so dass eine solche Vorrichtung dazu benutzt werden kann, eine Annäherung einer anderen Sendereinheit, wie bspw. ein Mobiltelefon/Smartphone/Tablet, anhand des Anstiegs der Feldstärke eines geeigneten Frequenzbandes seiner Kommunikationsverbindungen, wie bspw. Bluetooth, WLAN oder des Mobilfunks, zu detektieren, um dann die eigentliche Sende-/Empfangsvorrichtung einzuschalten und eine Kommunikationsverbindung zu dem sich nähernden Gerät aufzubauen.

Dabei wird die Erkenntnis genutzt, dass durch die Annäherung eines anderen Gerätes nicht nur die Stärke von Signalen mit Frequenzen jenes Kommunikationsstandards ansteigt, auf dem tatsächlich nach erfolgtem Kommunikationverbindungsaufbau kommuniziert werden soll, sondern auch die Stärke von Signalen mit Frequenzen erfasst werden kann die ganz anderen Kommunikationstandards zugeordnet sind. So kann etwa zusätzlich neben und/oder anstatt einer Messung von nur Feldstärken im Bluetooth-Frequenzbereich zur Entscheidung über den Aufbau einer Bluetoothverbindung auch eine Messung von Feldstärken im GSM-, UMTS- oder WLAN (WIFI)- -Frequenzbereich bzw. Frequenzband erfolgen und die dabei erhaltenen Signalstärken herangezogen werden. Es wird also, noch platter und grob vereinfacht, z.B. eine Bluetooth-Verbindung dann aufgebaut, wenn (auch) die WLAN-Signalstärke-Entwicklung dafür spricht.

Alternativ kann dort, wo z.B. ein Advertising erfolgt, zunächst durch Feldstärkemessungen abgefragt werden, ob Dritte senden und sich nähern. Wenn dies der Fall ist, kann auf die entsprechenden Signale reagiert werden, indem eine Aktivierung erfolgt, d.h. indem knoteninterne Schaltkreise aktiv geschaltet werden und nicht nur der Empfang von Signalen an sich erkannt wird, sondern damit auch erkannt werden kann, wie die Signale codiert sind, und damit auch entsprechende Signale zum Kommunikationsaufbau ausgesandt werden können.

Soll nun ein Steuerbefehl vom Smartphone/Tablet zu einem weiter entfernten Knoten übertragen oder Zustandsdaten von diesem empfangen werden, leitet der in Empfangsnähe zum Smartphone befindliche Knoten die Nachricht an den nächste Knoten weiter bis das Zielgerät erreicht ist. Es sei zudem als auch für sich alleine vorteilhaft offenbart, dass, um gleiche Nachrichten nicht mehrmals an verschiedene Empfänger versenden zu müssen, ein Broadcast erfolgen kann, dass heißt eine Nachricht wird gleichzeitig an alle erreichbaren Knoten versendet, die dann ihrerseits die Nachricht an alle die von ihnen zu erreichbaren Knoten versenden.

Wenn ein Broadcast erfolgt, d.h. eine Nachricht gleichzeitig an alle von einem Sender aus direkt erreichbare Knoten versendet wird, die dann ihrerseits die Nachricht an alle von ihnen erreichbaren Knoten (weiter) versenden können, ist es vorteilhaft, Mechanismen vorzusehen, die ein mehrfaches Empfangen und Ausstrahlen ein und derselben Nachricht durch ein und denselben Knoten verhindern.

So könnte eine Nachricht in einem Knoten abgespeichert werden, bevor bzw. während oder unmittelbar nachdem sie durch Ausstrahlen weitergeleitet wird. Wenn ein Knoten eine Nachricht abspeichert und abstrahlt, kann er später, wenn wieder eine Nachricht für die Weiterausstrahlung empfangen wird, um über die weitere Ausstrahlung entfernt liegende Empfänger anzusprechen, durch Vergleich mit den von ihm zuvor abgespeicherten Nachrichten verhindern, dass ein lediglich die frühere Nachricht weiterleitender Nachbarknoten als Quelle einer neuen Nachricht aufgefasst wird. Es ist auch nicht erforderlich, die gesamte Nachricht abzuspeichern. Vielmehr können darauf bezogene Informationen wie Header etc. abgespeichert werden, an welchen die Nachricht zumindest temporär eindeutig erkennbar bzw. identifizierbar ist. Es sei erwähnt, dass die Speicherung nur für eine bestimmte Zeit erforderlich ist, weil davon ausgegangen werden muss, dass nach einer bestimmten Zeit eine Nachricht vollständig durch ein Maschennetz gelaufen ist und demnach auch nicht wieder zurücklaufen wird, wenn alle Knoten wiederholte Wiederausstrahlung vermeiden.

Es sei darauf hingewiesen, dass der für die Speicherung bereits empfangener Nachrichten bzw. Nachrichtenkennungen erforderliche Speicherplatz selbst bei großen Netzwerken recht klein gehalten werden kann, weil im Regelfall ein typisch zyklisches Durchlaufen nach Art eines Ringspeichers mit Überschreiben ältester Daten gewährleistet, dass eine Doppelt-Ausstrahlung durch denselben Knoten von wiederholt derselben Nachricht verhindert werden kann.

Es sei erwähnt, dass der Broadcast von Nachrichten sich auch bei Anwendung der Erfindung schon deshalb positiv auswirkt, weil insgesamt weniger oft Nachrichten gesendet werden müssen, so das bestimmte Frequenzbänder insgesamt weniger oft verwendet werden müssen. Selbst wenn etwa für Entfernungsmessungen Feldstärkemessungen auf ausschließlich jenen Frequenzkanälen herangezogen werden, die nur zum Aushandeln einer Verbindung, also dem sog. "Advertising" benötigt werden, wird durch die bei Broadcast geringere Anzahl von Nachrichten doch weniger oft auf dem entsprechenden Frequenzband bzw. Kanal Aktivität herrschen und demgemäß werden die erfindungsgemäß gewünschten Feldstärke-Messungen weniger stark bzw. weniger oft gestört sein. Gerade bei batteriebetriebenen Geräten, bei denen nur sporadisch die Stärken von Fremdsignalen bzw. Signallaufzeiten abgefragt werden sollen, ist dies vorteilhaft.

Die im Smartphone üblicherweise integrierte Lagesensorik wird erfindungsgemäß in Verbindung mit der Annäherungsmessung zur Bestimmung des für ein Steuer- und/oder Sensormodul notwendige Bedienmenü herangezogen, indem man bspw. mit dem Smartphone auf eine Empfangseinrichtung, wie z.B. eine bestimme Deckenleuchte, zeigt. Dies gilt gleichermaßen, wenn Gesten, wie bspw. das Schütteln des Smartphones, in Verbindung mit der Annäherung zu einem Steuer- und/oder Sensormodul zur Auswahl des Bedienmenüs verwendet werden. Es wird vorgeschlagen, die Annäherungserfassung gemäß der vorliegenden Erfindung zu kombinieren mit einer Gestensteuerung, um eine noch präzisere Auswahl vorzunehmen bzw. den Benutzerkomfort zu erhöhen. Dabei kann z.B. anhand von Messungen gemäß der Erfindung eine (Vor)selektion anzusprechender Geräte bzw. fernsteuerbarer Module erfolgen und unter diesen dann mit Gesten ausgewählt werden. Dies erlaubt es, ein Gerät auch dann zu bedienen, wenn man sich diesem noch nicht vollständig genähert hat, an diesem vorbeigelaufen ist usw., was in der Praxis oftmals aus Bequemlichkeitsgründen der Fall sein wird.

Entsprechende Aktionen können auch nutzerspezifisch erfolgen, indem zusätzlich die Kennung des Nutzers, bspw. die eindeutige Bluetooth-ID seines Smartphones/Fernsteuerung, zur Programm-/Menüauswahl im Smartphone und/oder automatischen Funktionsauslösung im Steuer- und/oder Sensormodul oder zur automatischen Meldung verwendet wird.

Neben dem Einsatz in Gebäudesteuerungen und elektrischen Türöffnungseinrichtungen kann das erfindungsgemäße Verfahren auch in Verbindung mit Haushaltsgeräten, Kaufautomaten oder anderen zu bedienenden Geräten oder Einrichtungen dienen. Bewegt sich bspw. der Nutzer mit seinem Smartphone in Richtung eines Haushaltsgeräts und/oder zeigt er auf dieses, kann automatisch das notwendige Bedienprogramm und/oder Bedienmenü geladen oder gar ein Schaltvorgang direkt ohne Zutun des Nutzers ausgelöst.

In einer bevorzugten Anwendung kann ein Zutritt kontrolliert werden. Es soll erwähnt werden, dass der Nutzer anhand der ID des Smartphones/Tablet identifiziert und spezifische Aktionen ausgelöst werden können, wie bspw. die Tür zu öffnen oder automatisch das gewünschte Lichtszenario dieses Nutzers zu aktivieren, wenn er er den Raum betritt. Diese Aktionen können auch zeitabhängig ausgelöst werden, so dass ein Nutzer bspw. nur zu bestimmten Zeitpunkten den Zutritt erhält und sich die Tür öffnet, wenn er anhand der ID seiner Kommunikationsverbindung detektiert wird. Es soll erwähnt werden, dass auch die Abfrage einer Pinnummer oder eine andere Art der Identifizierung über das Smartphone/Tablet vom Nutzer oder einem Dritten zusätzlich angefordert werden kann, insbesondere auch zeitabhängig, wenn der Nutzer ausserhalb üblicher Zeiten die Tür öffnen möchte. Dass eine entsprechende Zutrittskontrolle typisch mit Annäherungsmessungen kombiniert werden kann, insbesondere durch ein erfindungsgemäßes Verfahren, versteht sich schon aus dem Zusammenhang.

In einer bevorzugten Anwendung kann eine Nutzer- und/oder Zeitsteuerung erfolgen. Die Aktivierung von Programmen oder Programmteilen bzw. spezieller kontextbezogener Menüs auf dem Smartphone/Tablet des Nutzers können abhängig vom Nutzer und/oder der aktuellen Uhrzeit auch unterschiedlich sein, d.h. ein Installateur, der anhand der ID seiner Kommunikationsverbindung erkannt wird, erhält bspw. das Menü für die Konfiguration der im Raum befindlichen oder mit ihm logisch zusammenhängenden Funktionen, während andere Nutzer das eigentliche normale Bedienmenü für den Raum erhält.

Besonders vorteilhaft ist die Erfindung bei Geräten im Batteriebetrieb. Wird eine Sende-/Empfangseinrichtung mit angeschlossenem Steuer- und/oder Sensormodul bzw. Gerät, bspw. eine Einheit einer Gebäudesteuerung, einer Alarmanlage, einer Heizungssteuerung, einer Brandmeldeanlage, eines Haushaltgeräts, eines Kaufautomaten oder einer Türöffnungsvorrichtung, mit einer Batterie versorgt, wird es in der Regel meist notwendig sein, das batteriebetriebene Gerät im Stromsparmodus zu betreiben. Die Überwachung eines Schaltkontakts oder eines Temperatursensors benötigt in der Regel sehr wenig Energie, aber die zur Kommunikation notwendige Sende-/Empfangseinrichtung und vor allem deren digitale Weiterverarbeitung wird in der Regel zuviel Energie verbrauchen, so dass bei deren Dauerbetrieb die Batterielebensdauer sehr eingeschränkt wäre. Deshalb ist es zweckmäßig, zumindest die Sende-/Empfangseinrichtung zeitweise abzuschalten oder in einen Energiesparmodus zu versetzen, und diese dann nur bei Bedarf aufzuwecken bzw. einzuschalten.

Es sei im Übrigen erwähnt, dass es möglich ist, Sende-/Empfangseinrichtung zeitgesteuert zu betreiben und jeweils zur Suche nach einem Kommunikationspartner nur kurz einzuschalten. (Dies kann sowohl bei der Messung von Feldstärken, Signallaufzeiten oder dergleichen als auch beim herkömmlichen Aufbau bzw. dem herkömmlichen Aufbau von Verbindungen geschehen. Dann braucht immer nur kurz gesendet werden bzw. kurz auf empfangene Signale gelauscht werden, bevor bei Nichtempfang wieder eine gegen die Lausch- bzw.

Testsendezeit lange Phase abgewartet wird. Um gegebenenfalls zu vermeiden, dass mehrere dergestalt agierende Geräte sich zu lange durch zu kurze Duty-Zyklen verpassen, kann wiederholt ein etwas längerer Dutyzyklus zwischengeschoben werden, insbesondere ein nur auf andere Sender lauschender und somit trotzdem energiesparender Zyklus. Wenn dabei ein Signal eines anderen Gerätes erfasst wird, kann versucht werden, eine Verbindung aufzubauen. Wo sehr viele Geräte dicht beieinander angeordnet sind und damit gerechnet werden muss, dass durch diese bei einer solchen Konstellation wiederholt ein Verbindungsaufbau erfolgt, kann evtl. verhindert werden, dass Signale mit bestimmten Signalstärken (also z.B. Feldstärken) zum Signalaufbau führen. Wenn dann ein Knoten nicht nur zu Zwecken einer Art Heart-Beat-Überwachung sendet, sondern z.B. eine Nachricht per Broadcast weiterleiten will, kann dafür die Advertising-Stärke erhöht werden.)

Eine andere Möglichkeit ist die Sende-/Empfangseinrichtung zeitgesteuert zu betreiben und jeweils zur Suche nach einem Kommunikationspartner nur kurz einzuschalten. Wird kein Kommunikationspartner in der Nähe gefunden, schaltet sich die Einheit bspw. für eine Sekunde ab bzw. fällt in den Energiesparbetrieb um dann erneut für einige Millisekunden nach einem Kommunikationspartner zu suchen. (Jammer) Werden solche Sende-/Empfangseinrichtung mit angeschlossenem Steuer- und/oder Sensormodul bzw. Gerät, bspw. eine Einheit einer Gebäudesteuerung, einer Alarmanlage, einer Heizungssteuerung, einer Brandmeldeanlage, eines Haushaltgeräts, eines Kaufautomaten oder einer Türöffnungsvorrichtung, gestört, indem deren Funkverbindung beeinträchtigt wird, bspw. durch einen Manipulationsversuch mit einem Jammer, kann dies festgestellt werden, da die Netzwerkverbindungen zu anderen Einheiten teilweise oder ganz ausfallen. Dies könnte dann zumindest einen lokalen Alarm auslösen, der bspw. audiovisueller Natur sein kann oder die lokalen Aktoren verwendet, wie bspw. durch Einschalten oder Blinken des Raumlichts oder Auf- und Abfahren der Rollos.

Die Erfindung wird im nachstehenden noch beschrieben unter Bezugnahme auf die Zeichnung, in welcher gezeigt ist durch
- Fig. 1: eine Anordnung gemäß der vorliegenden Erfindung
- Fig. 2: Signalstärke in 2 Frequenzbändern (Bluetooth und WLAN) bei Annäherung eines mobilen sendenden Gerätes an ein anderes, empfangendes Gerät

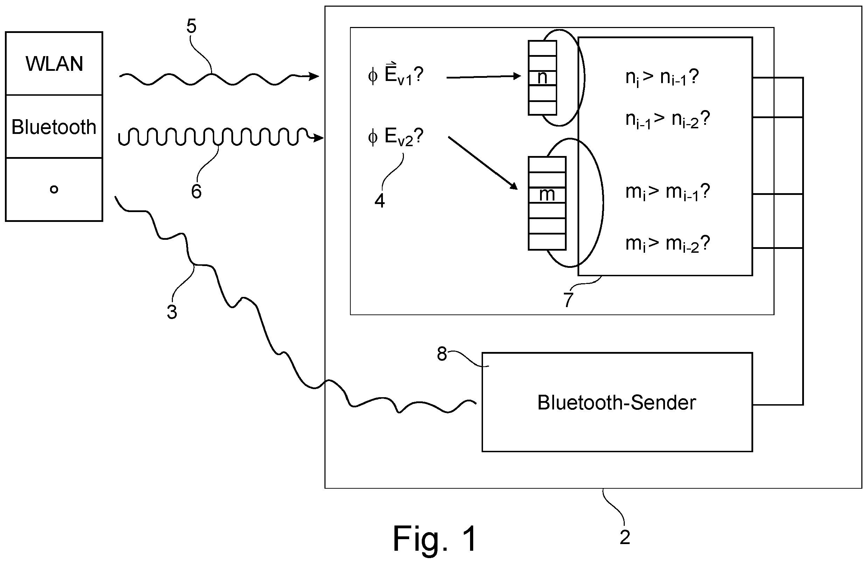

In Fig. 1 ist schematisch eine Anordnung dargestellt, mit welcher ein Kommunikationsverfahren ausgeführt werden kann, bei dem Geräte 1 und 2 untereinander eine drahtlose Kommunikationsverbindung 3 im Ansprechen auf eine Vielzahl drahtlos gemessener (5,6) Entfernungen aufbauen, wobei die Entfernungen durch Messungen, vgl. 4, auf unterschiedlichen Frequenzen 5 und 6 ermittelt werden.

Dabei ist Gerät 1 ein herkömmliches Smartphone, das unter anderem eine WLAN-Schnittstelle und eine Bluetooth-Schnittstelle besitzt. Diese Schnittstellen benutzen bekannter Weise unterschiedliche Frequenzbänder, wie durch die entsprechende Funksignale andeutenden Linien 5 und 6 veranschaulicht.

Das Smartphone wird regelmäßig WLAN-Signale und Bluetooth-Signale aussenden.

Das Gerät 2 ist ein Heimautomationsmodul mit einer Bluetoothschnittstelle und zumindest einer Anordnung 4, mit der die Feldstärke E ny1 und E ny2 im Frequenzband der WLAN-Signale und Bluetooth-Signale gemessen werden kann, die vom Smartphone 1 emittiert werden.

Die Anordnung 4 arbeitet hier im Zeitmultiplexbetrieb, d.h. sie ist immer nur eine kurze Zeitlang aktiv und hat danach ein Pausenintervall. Die Anordnung 4 ist dazu ausgebildet, auf die die in den aktiven Zeiten erfassten Feldstärken bezogene Digitalwerte in einem jeweiligen Ringspeicher abzulegen, so dass nach einiger Zeit Daten wieder überschrieben werden.

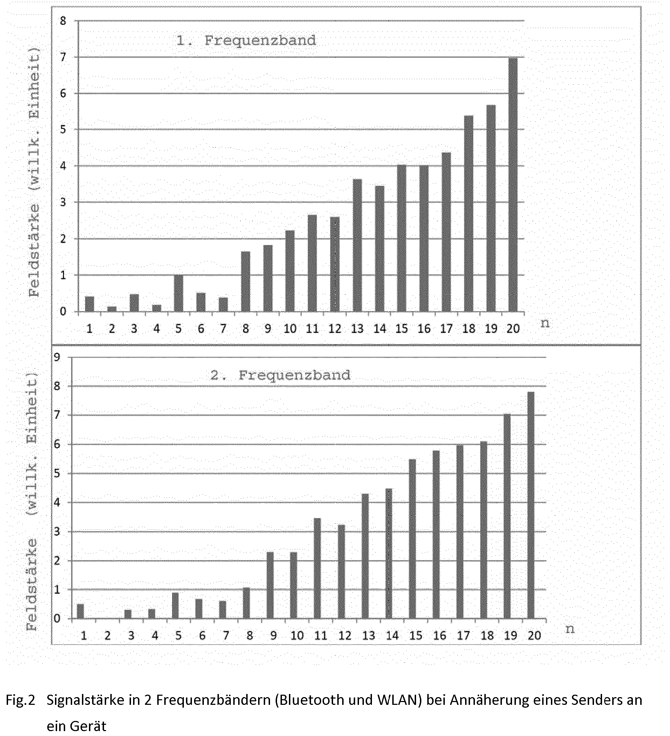

Fig.2 zeigt beispielhaft einen Verlauf der bei Annäherung des Smartphones 1 an das Heimautomationsmodul 2 erfassten Feldstärken. Wie ersichtlich, ist ab einer bestimmten Zeit ein Anstieg der verrauschten Signale in beiden Frequenzbändern klar erkennbar, auch wenn die einzelnen Signalfolgen nicht völlig eindeutig von aktiver Phase Schritt zu einer nachfolgenden aktiven Phase einen Signalanstieg zeigen.

Im Heimautomationsmodul ist nun eine Auswerteeinheit vorgesehen, die für beide Frequenzbändern Paare sukzessiver Messungen vergleicht, vgl. Bezugszahl 7. Dies kann mit niederem Takt durch eine einfache Digitalschaltung erreicht werden.

Wenn dabei ein sukzessiver Anstieg zu erkennen ist, wird ein Bluetooth-Sender 8 im Heimautomationsmodul 2 aktiv geschaltet, der wiederum eine Kommunikationsverbindung durch Signale 3 mit der Bluetooth-Schnittstelle des Smartphones 1 aufbaut.

Auf diese Weise braucht das Heimautomationsmodul 2 keine dauernd aktive Bluetooth-Schnittstelle, sondern kann energiesparend betrieben werden. Es wird aktiviert, wenn sich ein anderes Gerät nähert.

Unter Berücksichtigung des Erfassen einer Annäherung kann auch erkannt werden, wenn sich das Smartphone einem Modul nähert, das fernbedient werden kann oder soll. So kann etwa bei Verbindungsaufbau eine entsprechende Kennung übertragen werden und/oder es wird eine vergleichbare Schaltung auch im Smartphone implementiert. Dies erlaubt die Erfassung, welchem Heimautomationsmodul 2 sich genähert wurde und es kann entsprechend im Smartphone eine Verzweigung in ein geeignetes Untermenü einer Fernbedienungsapp bewirkt werden. Wie aus dem vorstehenden ersichtlich, wurde somit unter anderem beschrieben ein Verfahren mit einem Gerät, wie bspw. einem Smartphone oder eine Fernsteuerung, das über eine lokale drahtlose Kommunikationseinrichtung, wie bspw. Bluetooth, zu einer Sende-/Empfangseinrichtung mit angeschlossenem Steuer- und/oder Sensormodul, wie bspw. einer Einheit einer Gebäudesteuerung, eines Haushaltgeräts, eines Kaufautomaten oder einer Türöffnungsvorrichtung, verfügt, wobei die lokale drahtlose Kommunikationsverbindung, (a) sowohl zur Kommunikation mit einem an eine Sende-/Empfangseinrichtung angeschlossenen Steuer- und/oder Sensormodul dient, wie bspw. die Bedienung über Smartphone zu einer Gebäudesteuerung, eines Kaufautomaten, oder einer Türöffnungseinrichtung und der Nutzer darüber audiovisuell kommuniziert, Steuerbefehle absetzt, Meldungen weiterleitet und Sensor- bzw. Status-Daten erhält oder abfragt (b) als auch zur Messung der Entfernung oder Annäherung des Nutzers an eine Sende-/ Empfangseinrichtung, bspw. durch Bestimmung des Abstands und/oder Geschwindigkeit des Nutzers zur Empfangseinrichtung, auf Basis eben dieser Kommunikationsverbindung dient, bswp. durch direkte Entfernungsmessung der Signallaufzeit oder Messung der Änderung der Signalstärke des Kommunikationsfunksignals.

Beschrieben wurde weiter unter anderem ein Verfahren wie vorstehend angegeben, wobei gemäß einem weiteren Aspekt aus dieser Annäherung des Nutzers an eine Sende-/Empfangseinrichtung ==> automatisch Schalt- und Steuervorgänge eingeleitet oder Nachrichten versendet werden und so bspw. bei Annäherung Licht geschaltet, am Haus geklingelt, Meldungen an Dritte oder andere Steuereinheiten verschickt werden, audiovisuelle Aufzeichnungen starten oder eine Tür selbstständig öffnet bzw. verriegelt.

Beschrieben wurde weiter unter anderem ein Verfahren wie vorstehend angegeben, wobei gemäß einem weiteren Aspekt aus dieser Annäherung an eine Sende-/Empfangseinrichtung ==> das für die Bedienung des angeschlossenen Steuer- und/oder Sensormodul bzw. Geräts notwendige Programm im Smartphone aktiviert und automatisch ins passende Menü verzweigt wird, welches der Nutzer für die aktuelle Bedienung benötigt, wie bspw. das örtlich passende Menü zu einer lokalen Raumlichtsteuerung, Heizungsregelung, einer Türöffnungseinrichtung oder auch zu einem Kaufautomaten, in deren Nähe er sich befindet und vorzugsweise ohne dass der Nutzer selbst das entsprechende Programm aussuchen, starten und in das notwendige Untermenü verzweigen muss.

Beschrieben wurde weiter unter anderem ein Verfahren wie vorstehend angegeben, wobei gemäß einem weiteren Aspekt aus dieser Annäherung an eine Sende-/Empfangseinrichtung ==> das für die Bedienung des angeschlossenem Steuer- und/oder Sensormodul bzw. Geräts notwendige Programm oder Teile des Programms davon automatisch über die lokale Kommunikationsverbindung, bspw. Bluetooth, von der Sende-/Empfangseinrichtung zum Smartphone und umgekehrt geladen werden.

Beschrieben wurde weiter unter anderem ein Verfahren wie vorstehend angegeben, wobei gemäß einem weiteren Aspekt aus dieser Annäherung an eine Sende-/Empfangseinrichtung ==> das Smartphone/Fernsteuerung von dieser deren Positionsdaten erhält und damit vorzugsweise eine Karte der Umgebung lädt und/oder öffnet und die Position der Sende-/Empfangseinrichtung in der Karte kenntlich macht oder den Nutzer bei der Navigation im Gebäude unterstützt.

Beschrieben wurde weiter unter anderem ein Verfahren wie vorstehend angegeben, wobei gemäß einem weiteren Aspekt aus der gleichzeitigen Bestimmung des Abstands zwischen Smartphone zu mehreren Sende-/Empfangseinrichtungen über Triangulation ==> die Positions-bestimmung des Smartphones in Relation zu den Sende-/ Empfangseinrichtungen erfolgt und daraus ein in der Nähe des Smartphones gelegene Steuer- und/oder Sensormodul identifiziert wird, ohne dass dieses selbst über eine Nahbereichs-Empfangseinrichtung verfügt und so automatisch das zugehörige Bedienprogramm geladen und/oder das notwendige Bedienmenü für eben dieses Steuer- und/oder Sensormodul aktiviert oder eine Funktion ausgelöst wird.

Beschrieben wurde weiter unter anderem ein Verfahren wie vorstehend angegeben, wobei gemäß einem weiteren Aspekt aus dieser Annäherung an eine Sende-/Empfangseinrichtung in Verbindung mit der Lagesensorik oder Gestenerkennung des Smartphones, bspw. Schütteln, ==> ein Steuer- und/oder Sensormodul gekennzeichnet wird und so automatisch das zugehörige Bedienprogramm geladen und/oder das notwendige Bedienmenü für eben dieses Steuer- und/oder Sensormodul aktiviert wird und/oder ein Bedienvorgang durch eine Lageänderung oder Gestik mit dem Smartphone ausgelöst wird.

Beschrieben wurde weiter unter anderem ein Verfahren wie vorstehend angegeben, wobei gemäß einem weiteren Aspekt eine Kennung des Nutzers, bspw. die eindeutige Bluetooth-ID seines Smartphones/Fernsteuerung, zur Auswahl eines Bedienprogramms und/oder Untermenüs, zum Auslösen eines automatischen Funktionsauslösung oder Senden einer Meldung herangezogen wird.

Beschrieben wurde weiter unter anderem ein Verfahren wie vorstehend angegeben, wobei gemäß einem weiteren Aspekt bei Annäherung an eine Sende-/Empfangseinrichtung mit angeschlossenem Steuer- und/oder Sensormodul bzw. Geräts ZEITABHÄNGIG, bspw. aufgrund einer Zeittabelle im Gerät und/oder des Smartphone und/oder auf einem entfernten Server, und/oder NUTZERABHÄNGIG, bspw. aufgrund der ID der Kommunikationsverbindung oder einer Nutzerkennung im Smartphone/Tablet, ==> Daten lokal im Gerät und/oder auf dem Smartphone und/oder auf einem entfernten Server gespeichert werden, wobei in den gespeicherten Daten bspw. enthalten sein kann: ein Zeitstempel, und/oder die Kennung des Nutzers, und/oder die ID der Kommunikationsverbindung, und/oder die Zustandsdaten des Steuer-/Sensormoduls bzw. Geräts, und/oder lokale Umgebungsdaten, wie Temperatur, Helligkeit, Zustand der Tür, Zustand des Schlosses, und/oder Daten vom Smartphone/Tablet des sich annähernden Nutzers.

Beschrieben wurde weiter unter anderem ein Verfahren wie vorstehend angegeben, wobei gemäß einem weiteren Aspekt bei Annäherung an eine Sende-/Empfangseinrichtung mit angeschlossenem Steuer- und/oder Sensormodul bzw. Geräts ZEITABHÄNGIG, bspw. aufgrund einer Zeittabelle im Gerät und/oder des Smartphone und/oder auf einem entfernten Server, und/oder NUTZERABHÄNGIG, bspw. aufgrund der ID der Kommunikationsverbindung oder einer Nutzerkennung im Smartphone/Tablet, ==> unterschiedliche Programme im Smartphone aktiviert und/oder automatisch ins passende Menü verzweigt wird, welches der Nutzer für die aktuelle Bedienung benötigt, wie bspw. das örtlich passende Menü zu einer lokalen Raumlichtsteuerung, Heizungsregelung, einer Türöffnungseinrichtung oder auch zu einem Kaufautomaten, in deren Nähe er sich befindet und vorzugsweise ohne dass der Nutzer selbst das entsprechende Programm aussuchen, starten und in das notwendige Untermenü verzweigen muss.

Beschrieben wurde weiter unter anderem ein Verfahren wie vorstehend angegeben, wobei gemäß einem weiteren Aspekt aus bei Annäherung an eine Sende-/Empfangseinrichtung mit angeschlossenem Steuer- und/oder Sensormodul bzw. Geräts ZEITABHÄNGIG, bspw. aufgrund einer lokalen Zeittabelle im Gerät und/oder des Smartphone und/oder auf einem entfernten Server, und/oder NUTZERABHÄNGIG, bspw. aufgrund der ID der Kommunikationsverbindung oder einer Nutzerkennung im Smartphone/Tablet, ==> unterschiedliche Programme oder Teile des Programms davon automatisch über die lokale Kommunikationsverbindung, bspw. Bluetooth, von der Sende-/Empfangseinrichtung zum Smartphone und umgekehrt geladen werden.

Beschrieben wurde weiter unter anderem ein Verfahren wie vorstehend angegeben, wobei gemäß einem weiteren Aspekt bei Annäherung an eine Sende-/Empfangseinrichtung mit angeschlossenem Steuer- und/oder Sensormodul bzw. Geräts ZEITABHÄNGIG, bspw. aufgrund einer Zeittabelle im Gerät und/oder des Smartphone und/oder auf einem entfernten Server, und/oder NUTZERABHÄNGIG, bspw. aufgrund der ID der Kommunikationsverbindung oder einer Nutzerkennung im Smartphone/Tablet, ==> automatisch Schalt- und Steuervorgänge eingeleitet oder Nachrichten versendet werden und so bspw. bei Annäherung Licht geschaltet, am Haus geklingelt, Meldungen an Dritte oder andere Steuereinheiten verschickt werden, audiovisuelle Aufzeichnungen starten oder eine Tür selbstständig öffnet bzw. verriegelt.

Beschrieben wurde weiter unter anderem ein Verfahren wie vorstehend angegeben, wobei gemäß einem weiteren Aspekt bei Annäherung an eine Sende-/Empfangseinrichtung mit angeschlossenem Steuer- und/oder Sensormodul bzw. Geräts, ==> Meldungen über das Smartphone/Tablet und/oder andere Module, die ggfs. die gleiche Kommunikationsverbindung nutzen, wie bspw. Module einer Steuerungs- oder Meldeanlage eines Gebäudes, weitergeleitet werden, wobei in den Meldungen bspw. enthalten sein kann: ein Zeitstempel, und/oder die Kennung des Nutzers, und/oder die ID der Kommunikationsverbindung, und/oder die Zustandsdaten des Steuer-/Sensormoduls bzw. Geräts, und/oder lokale Umgebungsdaten, wie Temperatur, Helligkeit, Zustand der Tür, Zustand des Schlosses, und/oder Daten vom Smartphone/Tablet des sich annähernden Nutzers.

Beschrieben wurde weiter unter anderem ein Verfahren wie vorstehend angegeben, wobei gemäß einem weiteren Aspekt bei Annäherung an eine Sende-/Empfangseinrichtung mit angeschlossenem Steuer- und/oder Sensormodul bzw. Geräts, ==> von einem entfernten Server über das Smartphone und dessen Kommunikationseinrichtung und/oder das Modul/Gerät und dessen Kommunikationseinrichtung, Programme oder Programmteile und/oder Zeittabellen und/oder Berechtigungen für den Nutzer und/oder andere Daten in das Steuer-/Sensormodul bzw. Gerät geladen werden.

Beschrieben wurde weiter unter anderem ein Verfahren wie vorstehend angegeben, wobei gemäß einem weiteren Aspekt mit einer Vorrichtung zur Feldstärkemessung und mit einer durch eine Batterie versorgte Sende-/Empfangseinrichtung mit angeschlossenem Steuer- und/oder Sensormodul bzw. Gerät, bspw. einer Einheit einer Gebäudesteuerung, einer Alarmanlage, einer Heizungssteuerung, einer Brandmeldeanlage, eines Haushaltgeräts, eines Kaufautomaten oder einer Türöffnungsvorrichtung, und wobei gekennzeichnet, dass die Vorrichtung zur Feldstärkemessung energiesparend und ggfs. im Zeitmultiplex betrieben wird und die Annäherung eines Mobiltelefons/ Smartphones/Tablet misst, um erst dann die eigentliche Sende-/Empfangseinrichtung einzuschalten und mit den Smartphone dann eine Kommunikationsverbindung aufbaut.

Beschrieben wurde weiter unter anderem ein Verfahren insbesondere wie vorstehend angegeben, mit mehreren Sende-/Empfangseinrichtungen mit angeschlossenem Steuer- und/oder Sensormodul bzw. Gerät, bspw. einer Einheit einer Gebäudesteuerung, einer Alarmanlage, einer Heizungssteuerung, einer Brandmeldeanlage, eines Haushaltgeräts, eines Kaufautomaten oder einer Türöffnungsvorrichtung, und wobei jede einzelne Sende-/Empfangseinrichtung bei teilweiser Störung oder Ausfall der Kommunikations- verbindung zu den anderen Sende-/Empfangseinrichtungen diese Störung/Ausfall dem Nutzer signalisiert, bspw. durch eine audiovisuelle Meldung oder dazu die lokalen Aktoren verwendet, wie bspw. durch Einschalten oder Blinken des Raumlichts oder Auf- und Abfahren der Rollo.

## Patentansprüche

1. Kommunikationsverfahren, bei dem Geräte untereinander eine drahtlose Kommunikationsverbindung im Ansprechen auf eine Vielzahl drahtlos durch Messungen auf unterschiedlichen Frequenzen ermittelter Entfernungen derart aufbauen, dass die Kommunikationsverbindung gezielt zu einem ganz bestimmten Gerät aus einer Vielzahl potentieller Verbindungspartner aufgebaut wird, die Entfernungen durch Messung auf unterschiedlichen Frequenzen bestimmt werden,
die erste Frequenzen bzw. einen ersten Frequenzbereich und zweite Frequenzen bzw. einen zweiten Frequenzbereich umfassen, wobei
die Frequenzen nur zum Teil Signale mit Frequenzen jenes Kommunikationsstandards umfassen, nach welchem die drahtlose Kommunikationsverbindung aufgebaut wird, und die drahtlose Kommunikationsverbindung im Ansprechen auf eine sukzessive Abnahme der Distanz zwischen den Geräten und/oder eine unter Berücksichtigung der gemessenen Entfernung bestimmte Annäherungsgeschwindigkeit bestimmt wird,
wobei
zumindest eines der Geräte für die Verwendung als Fernbedienung ausgelegt ist und eine integrierte Lagesensorik aufweist,
zumindest ein anderes der Geräte zu einer Vielzahl fern zu bedienender Geräte gehört,
und die drahtlose Kommunikationsverbindung
zwischen diesen beiden Geräten im Ansprechen auf die sukzessive Abnahme der Distanz zwischen den Geräten und/oder die unter Berücksichtigung der gemessenen Entfernung bestimmte Annäherungsgeschwindigkeit
gezielt so aufgebaut wird, dass
die Kennzeichnung eines Gerätes als zu bedienendes Gerät sowohl basierend auf
der bestimmten sukzessiven Abnahme der Distanz zwischen den Geräten
und/oder
der unter Berücksichtigung der gemessenen Entfernung bestimmten Annäherungsgeschwindigkeit
als auch basierend auf
dem mit der Lagesensorik erfolgenden Erfassen, dass mit dem zur Verwendung als Fernbedienung ausgelegten Gerät auf ein zu bedienendes Gerät gezeigt wird bzw. dem Erkennen, dass mit dem zur Verwendung als Fernbedienung ausgelegten Gerät eine Geste ausgeführt wird,
erfolgt.

2. Kommunikationsverfahren nach einem der vorhergehenden Ansprüche, **dadurch gekennzeichnet, dass** die Entfernung durch Laufzeitmessungen auf unterschiedlichen Frequenzen gemessen werden.

3. Kommunikationsverfahren nach einem der vorhergehenden Ansprüche, **dadurch gekennzeichnet, dass** die Entfernung durch Feldstärke-Messungen auf unterschiedlichen Frequenzen bestimmt wird.

4. Kommunikationsverfahren nach einem der vorhergehenden Ansprüche, bei dem Geräte im Ansprechen auf eine Vielzahl gemessener Entfernungen eine drahtlose Kommunikationsverbindung aufbauen, **dadurch gekennzeichnet, dass** die Entfernungen durch Messungen auf unterschiedlichen Frequenzbändern ermittelt werden, von denen eines für den Aufbau der drahtlosen Kommunikationsverbindung verwendet wird und von welchen mindestens eines einem anderen Kommunikationsstandard zugeordnet ist.

5. Kommunikationsverfahren nach einem der vorhergehenden Ansprüche, **dadurch gekennzeichnet, dass** die ersten Frequenzen bzw. der erste Frequenzbereich für einen ersten Kommunikationsstandard verwendet wird, insbesondere einem kurzreichweitigen aus der Gruppe Zigbee, Zwave, Bluetooth, Bluetooth-LE; und zweite Frequenzen bzw. der zweite Frequenzbereichen einem zweiten Kommunikationsstandard zugeordnet sind, insbesondere einem längerreichweitigen, der bevorzugt aus der Gruppe UMTS und WLAN.

6. Kommunikationsverfahren nach einem der vorhergehenden Ansprüche, **dadurch gekennzeichnet, dass** bei miteinander in Verbindung tretenden Geräten auf beiden Seiten die Entfernung durch Messungen auf unterschiedlichen Frequenzen ermittelt wird und eine drahtlose Kommunikationsverbindung im Ansprechen auf eine Vielzahl drahtlos gemessener Entfernungen aufgebaut wird.

7. Kommunikationsverfahren nach einem der vorhergehenden Ansprüche, **dadurch gekennzeichnet, dass** vor Verbindungsaufbau zumindest eines der Geräte nur temporär so aktiv geschaltet wird, wie es das Abfragen auf die Notwendigkeit eines möglichen Verbindungsaufbau erfordert, während das zumindest eine Gerät während anderer Zeiten in einen Stand-by- oder Energiesparmodus geschaltet ist.

8. Kommunikationsverfahren nach einem der vorhergehenden Ansprüche,
**dadurch gekennzeichnet, dass**
als fernbedienendes Gerät ein Mobiltelefon, Smartphone oder Tablett verwendet wird
und auf die kombinierte Auswertung
von einerseits
bestimmter Annäherungsgeschwindigkeit
bzw. bestimmter sukzessiver Abnahme der Distanz zwischen den Geräten
und andererseits
Erkennen einer Geste
bzw.
Erfassen des Zeigens
automatisch ein Bedienmenü auf dem Mobiltelefon, Smartphone oder Tablett aufgerufen wird.

## Claims

1. Communication method in which devices set up a wireless communication connection to one another in response to a multiplicity of distances determined wirelessly by means of measurements at different frequencies in such a manner that the communication connection is specifically set up to a very specific device from a multiplicity of potential connection partners, and the distances are determined by means of measurement at different frequencies comprising first frequencies or a first frequency range and second frequencies or a second frequency range, wherein
the frequencies only partially comprise signals at frequencies of that communication standard according to which the wireless communication connection is set up, and the wireless communication connection is determined in response to a gradual decrease in the distance between the devices and/or an approach speed determined taking into account the measured distance,
wherein
at least one of the devices is designed for use as a remote control and has an integrated position sensor system,
at least one other of the devices belongs to a multiplicity of devices to be remotely controlled,
and the wireless communication connection is specifically set up between these two devices in response to the gradual decrease in the distance between the devices and/or the approach speed determined taking into account the measured distance in such a manner that
a device is identified as a device to be controlled both on the basis of
the determined gradual decrease in the distance between the devices
and/or
the approach speed determined taking into account the measured distance
and on the basis of
the detection, which takes place using the position sensor system, that the device designed for use as a remote control is used to point to a device to be controlled and the recognition that the device designed for use as a remote control is used to perform a gesture.

2. Communication method according to one of the preceding claims, **characterized in that** the distance is measured by means of propagation time measurements at different frequencies .

3. Communication method according to one of the preceding claims, **characterized in that** the distance is determined by means of field strength measurements at different frequencies.

4. Communication method according to one of the preceding claims, in which devices set up a wireless communication connection in response to a multiplicity of measured distances, **characterized in that** the distances are determined by means of measurements in different frequency bands, one of which is used to set up the wireless communication connection and at least one of which is assigned to a different communication standard.

5. Communication method according to one of the preceding claims, **characterized in that** the first frequencies or the first frequency range respectively are used for a first communication standard, in particular a short-range standard from the group Zigbee, Zwave, Bluetooth, Bluetooth LE, and second frequencies or the second frequency range respectively are assigned to a second communication standard, in particular a longer-range standard, preferably from the group UMTS and WLAN.

6. Communication method according to one of the preceding claims, **characterized in that**, when devices are connected to one another, the distance is determined on both sides by means of measurements at different frequencies, and a wireless communication connection is set up in response to a multiplicity of wirelessly measured distances.

7. Communication method according to one of the preceding claims, **characterized in that**, before the connection is set up, at least one of the devices is only temporarily switched to active as required by the query with respect to the need for a possible connection set-up, whereas the at least one device is switched to a stand-by or energy-saving mode during other times.

8. Communication method according to one of the preceding claims,
**characterized in that**
a mobile telephone, a smartphone or a tablet is used as the remote-controlling device,
and a control menu is automatically called up on the mobile telephone, the smartphone or the tablet in response to the combined evaluation
of the determined approach speed
or the determined gradual decrease in the distance between the devices, on the one hand,
and
the recognition of a gesture
or
the detection of pointing, on the other hand.

## Revendications

1. Procédé de communication, avec lequel des appareils établissent entre eux une liaison de communication sans fil en réaction à une pluralité d'éloignements identifiés sans fil par des mesures à des fréquences différentes, de telle sorte que la liaison de communication est établie de manière ciblée vers un appareil bien précis parmi une pluralité de partenaires de liaison potentiels, les éloignements sont déterminés par une mesure à des fréquences différentes qui comprennent des premières fréquences ou une première plage de fréquences et des deuxièmes fréquences ou une deuxième plage de fréquences,
les fréquences ne comprenant qu'en partie des signaux avec des fréquences de la norme de communication selon laquelle est établie la liaison de communication sans fil, et la liaison de communication sans fil étant déterminée en réaction à une diminution successive de la distance entre les appareils et/ou à une vitesse d'approche déterminée en tenant compte de l'éloignement mesuré,
au moins l'un des appareils étant conçu pour l'utilisation en tant que commande à distance et possédant un système de détection de position intégré,
au moins un autre des appareils appartenant à une pluralité d'appareil à commander à distance,
et la liaison de communication sans fil étant établie de manière ciblée entre ces deux appareils en réaction à la diminution successive de la distance entre les appareils et/ou à la vitesse d'approche déterminée en tenant compte de
l'éloignement mesuré, de telle sorte que
l'identification d'un appareil en tant qu'appareil à commander s'effectue à la fois en se basant sur
la diminution successive déterminée de la distance entre les appareils
et/ou
la vitesse d'approche déterminée en tenant compte de l'éloignement mesuré
ainsi qu'en se basant sur
la détection, effectuée avec le système de détection de position, du fait que l'appareil conçu pour l'utilisation en tant que commande à distance pointe vers un appareil à commander ou la reconnaissance du fait qu'un geste est accompli avec l'appareil conçu pour l'utilisation en tant que commande à distance.

2. Procédé de communication selon l'une des revendications précédentes, **caractérisé en ce que** l'éloignement est mesuré par des mesures du temps de propagation à différentes fréquences.

3. Procédé de communication selon l'une des revendications précédentes, **caractérisé en ce que** l'éloignement est déterminé par des mesures de l'intensité du champ à différentes fréquences.

4. Procédé de communication selon l'une des revendications précédentes, avec lequel des appareils établissent une liaison de communication sans fil en réaction à une pluralité d'éloignements mesurés, **caractérisé en ce que** les éloignements sont identifiés par des mesures à des bandes de fréquences différentes, parmi lesquelles une est utilisée pour l'établissement de la liaison de communication sans fil et parmi lesquelles au moins une est affectée à une autre norme de communication.

5. Procédé de communication selon l'une des revendications précédentes, **caractérisé en ce que** les premières fréquences ou la première plage de fréquence sont utilisées pour une première norme de communication, notamment une de courte portée issue du groupe Zigbee, Zwave, Bluetooth, Bluetooth-LE ; et les deuxièmes fréquences ou la deuxième plage de fréquences sont affectées à une deuxième norme de communication, notamment une de plus longue portée, de préférence issue du groupe UMTS et WLAN.

6. Procédé de communication selon l'une des revendications précédentes, **caractérisé en ce que** lorsque des appareils entrent en communication les uns avec les autres, l'éloignement est identifié des deux côtés par des mesures à des fréquences différentes et une liaison de communication sans fil est établie en réaction à une pluralité d'éloignements mesurés sans fil.

7. Procédé de communication selon l'une des revendications précédentes, **caractérisé en ce qu'**avant l'établissement de la liaison, au moins l'un des appareils est activé temporairement seulement, comme l'exige l'interrogation à propos de la nécessité d'établissement possible d'une liaison, alors que l'au moins un appareil est commuté dans un mode de veille ou d'économie d'énergie pendant d'autres durées.

8. Procédé de communication selon l'une des revendications précédentes,
**caractérisé en ce que**
l'appareil de commande à distance utilisé est un téléphone mobile, un Smartphone ou une tablette
et sur l'interprétation combinée
d'une part
d'une vitesse d'approche déterminée
ou d'une diminution successive déterminée de la distance entre les appareils
et d'autre part
de la reconnaissance d'un geste
ou
de la détection du pointage
un menu de commande est automatiquement affiché sur le téléphone mobile, le Smartphone ou la tablette.
